# EUROPEAN PATENT APPLICATION

(11) **EP 4 201 186 A1**
(43) Date of publication of application: **28.06.2023**
(21) Application number: 21872075.3
(22) Date of filing: 26.08.2021
(51) Int. Cl.: A01D 34/13, A01G 3/08

(54) **HAIR-CLIPPER BLADE, HAIR-CLIPPER-TYPE TRIMMING DEVICE, AND METHOD OF MANUFACTURING HAIR-CLIPPER BLADE**

(30) Priority: 23.09.2020 JP 2020158354
(71) Applicant: Genpei Hamono Co., Ltd., Hyogo 673-0722 (JP)
(72) Inventor: MATSUO, Katsumi, Miki-shi, Hyogo 673-0722 (JP)
(74) Representative: Müller-Boré & Partner Patentanwälte PartG mbB
(86) International application number: PCT/JP2021/031283
(87) International publication number: WO 2022/064943

(57) **Abstract**

A cutting blade applied to a reciprocating-type cutting device (1) including a pair of cutting blades (2, 3) that are reciprocated in a state of being superposed on each other to cut an object to be cut. The cutting blade includes: a base element (21); and a plurality of blade bodies (22) jutting from the perimeter of the base element (21), the plurality of blade bodies (22) each having a sliding surface (24) that slides over a mating blade body (32). At least some of the plurality of blade bodies (22) each have a high-hardness section (22A) formed in a part including at least both ends (24a, 24b) in a sliding direction of the sliding surface (24), the high-hardness section (22A) having hardness higher than the hardness of the other part. The thickness of the high-hardness section (22A) is set to 10 µm or more and 200 µm or less.

## Description

### Technical Field

The present invention relates to a cutting blade applied to a reciprocating-type cutting device including a pair of cutting blades that are reciprocated in a state of being superposed on each other to cut an object to be cut, to a reciprocating-type cutting device including the cutting blade, and to a method of manufacturing the cutting blade.

### Background Art

A reciprocating-type cutting device has been known for years, which reciprocates two cutting blades having a plurality of projecting blade bodies and superposed on each other, thereby cutting an object to be cut, such as plants. For example, Patent Literature 1 discloses a reciprocating-type cutting device which includes a base element of a plate shape and a plurality of blade bodies jutting from sides of the base element and in which rising angls of the blade bodies of a cutting blade are set larger on a pulling side than on a pushing side.

According to the cutting blade disclosed in Patent Literature 1, it is expected that as a stress applied from the pushing side to the blade bodies is alleviated to make the cutting blade hardly breakable, cutting power on the pulling side is improved to offer higher cutting performance. The cutting blade disclosed in Patent Literature 1, however, still needs to be improved to maintain its unbreakability and better cutting performance.

### Citation List

### Patent Literature

Patent Literature 1: JP 2010-98972 A

### Summary of Invention

An object of the present invention is to provide a cutting blade that hardly breaks and that can maintain better cutting performance.

A cutting blade according to one aspect of the present invention is a cutting blade applied to a reciprocating-type cutting device including a pair of cutting blades that are reciprocated in a state of being superposed on each other to cut an object to be cut. The cutting blade includes: a base element; and a plurality of blade bodies jutting from the perimeter of the base element, the plurality of blade bodies each having a sliding surface that slides over a mating blade body. At least some of the plurality of blade bodies each have a high-hardness section formed in a part including at least both ends in a sliding direction of the sliding surface, the high-hardness section having hardness higher than hardness of the other part. The thickness of the high-hardness section is set to 10 µm or more and 200 µm or less.

A reciprocating-type cutting device according to another aspect of the present invention includes: two cutting blades of the above configuration, a holder holding the two cutting blades in a state of being superposed on each other; and a drive unit that causes the two cutting blades to reciprocate in a sliding direction of the sliding surface.

A method of manufacturing a cutting blade according to still another aspect of the present invention includes: forming the cutting blade out of a single sheet of steel; performing electroless nickel plating on the sliding surface of at least one of the blade bodies of the cutting blade formed of the steel; and following the electroless nickel plating, performing a baking treatment on the sliding surface to form the high-hardness section.

A method of manufacturing a cutting blade according to still another aspect of the present invention includes: forming the cutting blade out of a single sheet of steel; and performing laser hardening on the sliding surface of at least one of the blade bodies of the cutting blade formed of the steel to form the high-hardness section.

### Brief Description of Drawings

FIG. 1 is a plan view of an overall configuration of a reciprocating-type cutting device according to an embodiment of the present invention.
FIG. 2 is a side view of the reciprocating-type cutting device.
FIG. 3 is an exploded perspective view of the reciprocating-type cutting device.
FIG. 4A is a sectional view showing a state of movement of blade bodies that results when the reciprocating-type cutting device is driven.
FIG. 4B is a sectional view showing a state of movement of the blade bodies that results when the reciprocating-type cutting device is driven.
FIG. 4C is a sectional view showing a state of movement of the blade bodies that results when the reciprocating-type cutting device is driven.
FIG. 5 is a schematic sectional view of a blade body according to the first embodiment.
FIG. 6 is a flowchart of a method of manufacturing a cutting blade according to the first embodiment.
FIG. 7 is a schematic sectional view of a blade body according to a second embodiment.
FIG. 8 is a plan view showing a part of a cutting blade according to the second embodiment, the part being subjected to laser hardening.

### Description of Embodiments

Embodiments of the present invention will hereinafter be described with reference to the accompanying drawings. The following embodiments are examples of embodiment of the present invention, and are not intended to limit the technical scope of the present invention.

### (1) First Embodiment

### (Overall Configuration)

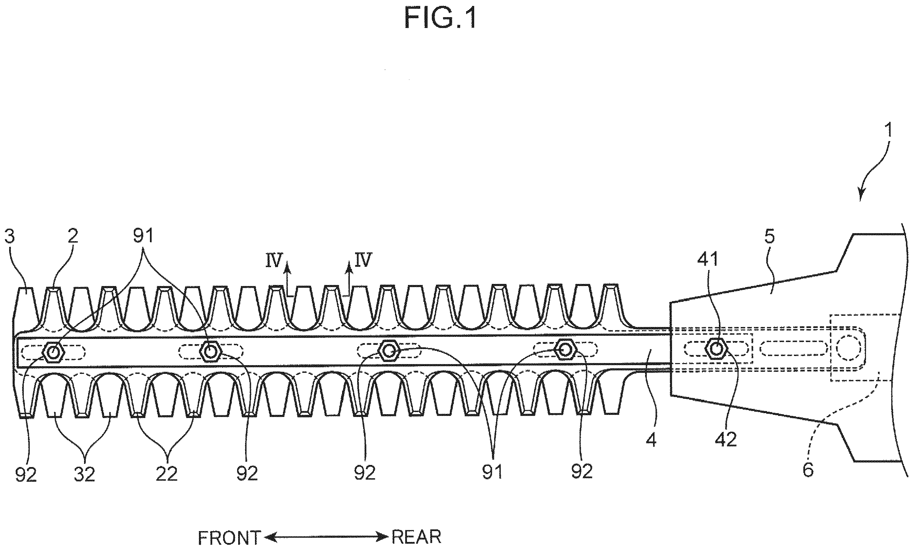

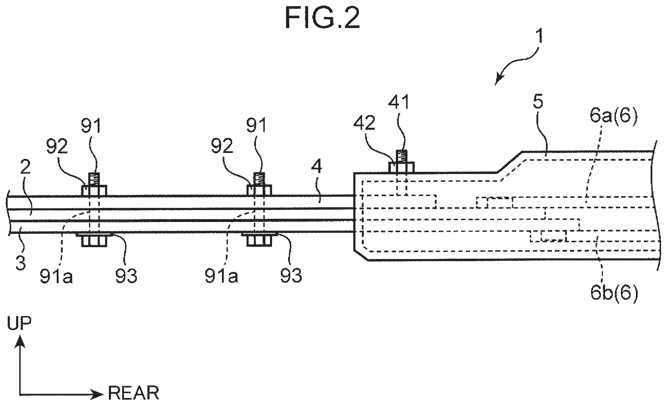

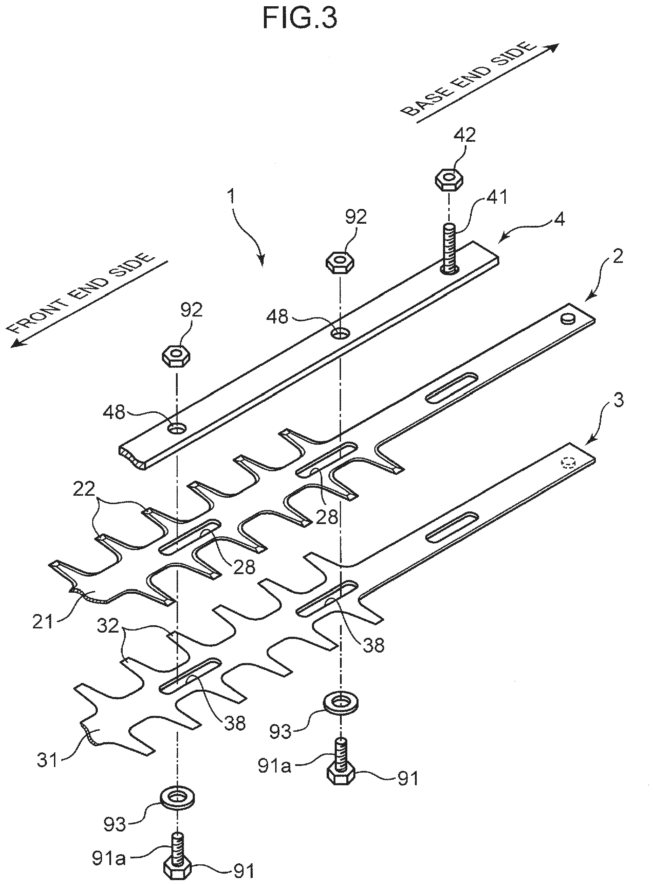

FIGS. 1 to 3 each depict an overall configuration of a reciprocating-type cutting device 1 according to a first embodiment of the present invention. Specifically, FIG. 1 is a plan view of the overall configuration of the reciprocating-type cutting device 1. FIG. 2 is a side view of the reciprocating-type cutting device 1. FIG. 3 is an exploded perspective view of the reciprocating-type cutting device 1. The reciprocating-type cutting device 1 includes a pair of cutting blades 2 and 3, which are blade parts, a guide plate 4, and a case 5 partially housing the cutting blades 2 and 3 and the guide plate 4. Further, the reciprocating-type cutting device 1 further includes a drive mechanism 6 that is housed in the case 5 and that drives the cutting blades 2 and 3. The drive mechanism 6 includes a crank mechanism that transforms rotational movement input from a driving source (not illustrated), such as a reciprocating engine, into reciprocating movement. Receiving power from the driving source, the drive mechanism 6 drives the cutting blades 2 and 3. The above guide plate 4 is an example of a "holder" according to the present invention, and the above drive mechanism 6 is an example of a "drive unit" according to the present invention.

The guide plate 4 is formed of a plate-like body elongated in one direction, and is fixed to the case 5 such that the guide plate 4 extends in a given direction from the case 5. Specifically, the guide plate 4 has a male screw 41 erected on a surface of one end in the longitudinal direction of the guide plate 4. The guide plate 4 is fixed to the case 5 with the male screw 41 and a nut 42 screwed thereon. The guide plate 4 has through-holes 48 formed on a plurality of parts of the guide plate 4 along the longitudinal direction. In the following description, when necessary, the longitudinal direction of the guide plate 4 of the reciprocating-type cutting device 1 will be referred to as a front-to-rear direction, a side where the case 5 is located, i.e., a side where a base end of the guide plate 4 is located will be referred to as a rear side, and a side opposite to the rear side, i.e., a side where a front end of the guide plate 4 is located will be referred to as a front side.

The cutting blades 2 and 3 are identical in shape and structure with each other. The cutting blades 2 and 3 include base elements 21 and 31 of plate shapes elongated in one direction, and a plurality of blade bodies 22 and 32 jutting from the perimeters of the base elements 21 and 31, respectively.

The cutting blades 2 and 3 are held by the guide plate 4 such that the base elements 21 and 31 extend along the guide plate 4 in the front-to-rear direction. The cutting blades 2 and 3 are held by the guide plate 4 in such a way that the cutting blades 2 and 3 are superposed on each other as the guide plate 4 is superimposed on a surface of the cutting blade 2, i.e., one of the cutting blades 2 and 3. In the following description, when necessary, a direction in which these cutting blades 2 and 3 and guide plate 4 are superposed will be referred to as a vertical direction, and a side where the guide plate 4 is located will be referred to as an upper side while a side where the cutting blades 2 and 3 are located will be referred to as a lower side. In addition, a direction perpendicular to the front-to-rear direction and the vertical direction will be referred to as a width direction, when necessary, in the description of the cutting blades 2 and 3 and guide plate 4.

The base elements 21 and 31 of the cutting blades 2 and 3 have guide holes 28 and 38 elongated in the front-to-rear direction, the guide holes 28 and 38 being formed on a plurality of parts of the base elements 21 and 31, respectively. Common bolts 91 are inserted through the guide holes 38 and 28 and the through-holes 48 of the guide plate 4, respectively. The bolts 91 are fastened with nuts 92, respectively, on an upper surface of the guide plate 4. Hence the cutting blades 2 and 3 are held tightly to the guide plate 4. Washers 93 are interposed between the heads of the bolts 91 and the cutting blade 3 on the lower side, respectively.

The diameter of each through-hole 48 of the guide plate 4 is set almost equal to the outer diameter of a shank 91a of each bolt 91. The size of each of the guide holes 28 and 38 in the width direction is too set almost equal to the outer diameter of the shank 91a of the bolt 91. The length of each of the guide holes 28 and 38 in the front-to-rear direction, on the other hand, is set longer than the shank 91a of the bolt 91. The cutting blades 2 and 3 are thus held by guide plate 4 in such a way that the cutting blades 2 and 3 are kept from moving in the width direction but are allowed to move in the front-to-rear direction.

Two cutting blades 2 and 3 are identical in shape and structure, as described above, and therefore have the blade bodies 22 and 32 identical in shape and structure and identical in number as well, respectively. The blade bodies 22 (32) of the cutting blade 2 (3) jut out in the width direction from both sides in the width direction of the base element 21 (31). The blade bodies 22 (32) are arranged at fixed intervals along the longitudinal direction of the base element 21 (31).

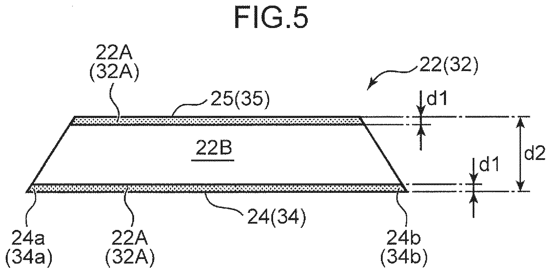

Each blade body 22 (32) is of a substantially trapezoidal shape in plan view. The blade body 22 (32) has both surfaces in its thickness direction (vertical direction) formed into flat surfaces, respectively. Rake surfaces are formed on the peripheral edge of the blade body 22 (32), and a section of the blade body 22 (32) (a section taken along a plane perpendicular to the width direction of the cutting blade 2 (3)) is of a substantially trapezoidal shape (see FIG. 5 and the like). One surface in the thickness direction of the blade body 22 (32), the one surface being greater in size in the front-to-rear direction, that is, one surface whose both ends constitute a blade edge slides over the blade body 32 (22) of the mating cutting blade 3 (2). The blade body 22 (32) thus has a flat sliding surface 24 (34) that constitutes the one surface in the thickness direction and that slides over the blade body 32 (22) of the mating cutting blade.

The two cutting blades 2 and 3 are held by the guide plate 4 as the cutting blades 2 and 3 are set in mutual reverse positions with their backs facing each other so that the sliding surface 24 (34) of the blade body 22 (32) faces the sliding surface 34 (24) of the mating cutting blade 3 (2).

Respective rear ends of the cutting blades 2 and 3 are connected to the drive mechanism 6, so that the cutting blades 2 and 3 are caused to reciprocate in the front-to-rear direction by drive mechanism 6. Specifically, the drive mechanism 6 includes a driver 6a that reciprocates in the front-to-rear direction to cause the cutting blade 2 on the upper side to reciprocate in the front-to-rear direction, and a driver 6b that reciprocates in the front-to-rear direction to cause the cutting blade 3 on the lower side to reciprocate in the front-to-rear direction. Two drivers 6a and 6b reciprocate in opposite phases, that is, reciprocate such that when one of the drivers 6a and 6b is at the foremost position, the other of the drivers 6a and 6b is at the rearmost position, and therefore the cutting blades 2 and 3 reciprocate in opposite phases as well.

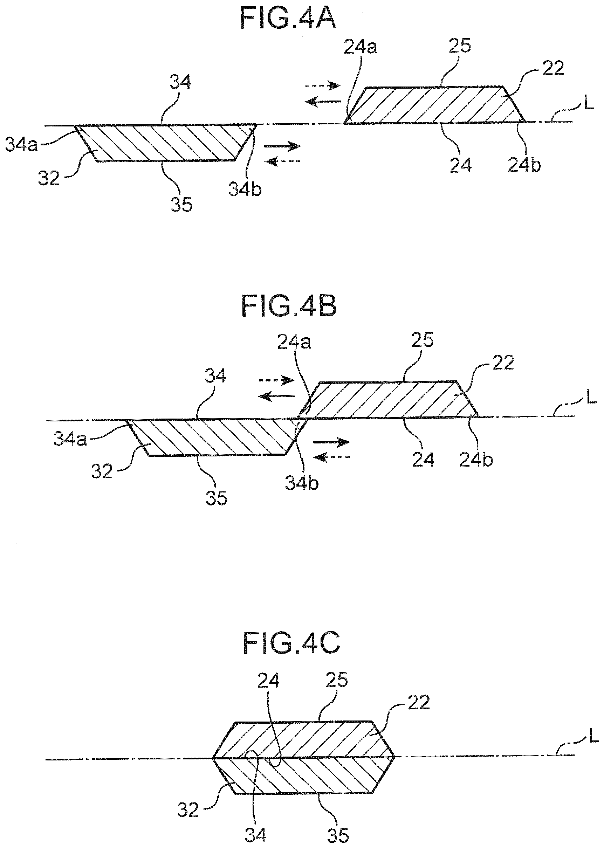

FIG. 4A to FIG. 4C each depict a state of movement of the blade bodies 22 and 32 that results when the cutting blades 2 and 3 reciprocate. It should be noted that FIG. 4A to FIG. 4C depict sections of the blade bodies 22 and 32 that are taken along a line IV-IV in FIG. 1. When the cutting blades 2 and 3 are driven, the blade body 22 of the cutting blade 2 on the upper side and the blade body 32 of the cutting blade 3 on the lower side, the blade body 32 being adjacent to the blade body 22, reciprocate in a direction in which the blade bodies 22 and 32 come into contact with and move away from each other as the sliding surfaces 24 and 34 slide over each other in the front-to-rear direction.

While the cutting blades 2 and 3 make one cycle of reciprocation, the blade bodies 22 and 32 of the cutting blades 2 and 3 make a series of movements in the order of FIG. 4A, FIG. 4B, FIG. 4C, FIG. 4B, and FIG. 4A. Specifically, the blade bodies 22 and 32 move in directions indicated by solid arrows. As a result, a state shown in FIG. 4A, in which the blade bodies 22 and 32 of the two cutting blades 2 and 3 are apart from each other in the front-to-rear direction, changes into a state shown in FIG. 4B, in which one end in the front-to-rear direction of the blade body 22 of the cutting blade 2 on one side faces the other end in the front-to- rear direction of the blade body 32 of the cutting blade 3 on the other side. Then, the state shown in FIG. 4B changes into a state shown in FIG. 4C, in which respective blade bodies 22 and 32 of the two cutting blades 2 and 3 entirely face each other in the vertical direction. Subsequently, the blade bodies 22 and 32 move in directions indicated by broken line arrows. The state shown in FIG. 4C thus changes into the state shown in FIG. 4B, which then changes back into the state shown in FIG. 4A. The sliding surfaces 24 and 34 of the blade bodies 22 and 32 then move along a prescribed plane L and slide over each other while the state shown in FIG. 4B changes into the state shown in FIG. 4C and the state shown in FIG. 4C changes back into the state shown in FIG. 4B.

The reciprocating-type cutting device 1 configured in the above manner is used as a device constituting a principle part of, for example, a grass trimmer or a pruning machine. The above-mentioned case 5 has a driving source connected thereto via a clutch device or the like, the driving source actuating the drive mechanism 6, and is provided with an operation handle an operator holds for manual operation (both driving source and operation handle are not illustrated). When the operator starts the driving source, the cutting blades 2 and 3 are caused to reciprocate at high speed in the front-to-rear direction. As a result, both ends 24a and 24b of the sliding surface 24 and both ends 34a and 34b of the sliding surface 34 in the front-to-rear direction (the sliding direction of the sliding surfaces 24 and 34), the ends 24a and 24b and the ends 34a and 34b constituting the blade edges of the blade bodies 22 and 32, respectively, hit an object to be cut, such as plants, at high speed, the object being caught between the blade body 22 of the cutting blade 2 on the upper side and the blade body 32 of the cutting blade 3 on the lower side, thus cutting the object to be cut. In the first embodiment, as shown in FIGS. 4A to 4C, the front end 24a of the sliding surface 24 of the blade body 22 of the cutting blade 2 on the upper side slides relatively on the sliding surface 34 of the blade body 32 of the cutting blade 3 on the lower side.. The front end 24a of the sliding surface 24 of the blade body 22 of the cutting blade 2 on the upper side and the rear end 34b of the sliding surface 34 of the blade body 32 of the cutting blade 3 on the lower side, therefore, are main working parts that cut the body to be cut.

### (Detailed Configuration of Blade Body)

A detailed configuration of the blade bodies 22 and 32 of the cutting blades 2 and 3 according to the first embodiment will then be described. A configuration of the blade body to be described below is the same configuration that every one of the blade bodies 22 and 32 has. In the following description, the blade body 22 of the cutting blade 2 will be described as one that represents both blade bodies 22 and 32.

FIG. 5 is a sectional view of the blade body 22 according to the first embodiment. The blade body 22 is configured such that the sliding surface 24 and a counter sliding surface 25 (a surface counter to the sliding surface 24 in the thickness direction of the blade body 22, i.e., in the vertical direction) each have hardness higher than that of the other part of the blade body 22. In other words, the blade body 22 includes high-hardness sections 22A having high hardness that are formed on both sides in the thickness direction of the blade body 22 and that constitute the sliding surface 24 and the counter sliding surface 25, respectively, and a low-hardness section 22B that constitutes the part other than the high-hardness section 22A and that has hardness lower than that of the high-hardness section 22A. In the first embodiment, the hardness of the low-hardness section 22B is set to HRC 40 or higher and HRC 50 or lower, and the hardness of each high-hardness section 22A is set to HRC 55 or higher (55 or higher in Rockwell hardness scale), that is, set to about Hv 600 or higher (about 600 or higher in Vickers hardness scale). In the first embodiment, every blade body 22 has the high-hardness sections 22A and the low-hardness section 22B.

The high-hardness section 22A is formed over the entire sliding surface 24 including both ends 24a and 24b in the front-to-rear direction (i.e., the sliding direction of the sliding surface 24) of the sliding surface 24 constituting the blade edge of the blade body 22. Likewise, the high-hardness section 22A is formed over the entire counter sliding surface 25 as well. The blade bodies 32 of the cutting blade 3 is configured in the same manner as described above. The sliding surface 34 and the counter sliding surface 35 of every blade body 32 serve as high-hardness sections 32A, while the other part of the blade body 32 serves as a low-hardness section. The high-hardness section 32A is formed over the entire sliding surface 34 including both ends 34a and 34b in the sliding direction of the sliding surface 34.

The thickness d1 of each of the high-hardness sections 22A (the thickness d1 of the high-hardness section 22A as the sliding surface 24 and that of the high-hardness section 22A as the counter sliding surface 25) is determined to be a given size ranging from 10 µm or more to 200 µm or less, which is sufficiently smaller than the thickness d2 of the blade body 22. The thickness d2 of the blade body 22, for example, ranges approximately from 1.5 mm to 3.0 mm. The thickness d1 of each high-hardness section 22A is, therefore, about 1/10 or less of the thickness d2 of the blade body 22.

In the first embodiment, the high-hardness section 22A is formed by performing electroless nickel plating and baking treatment on steel making up the blade body 22. In other words, according to the first embodiment, the blade body 22 is made of steel, and this steel making up the blade body 22, that is, a base material of blade body 22 that is made of the steel is subjected to the electroless nickel plating and baking treatment to form the high-hardness section 22A.

In the first embodiment, the cutting blade 2 including the high-hardness sections 22A is manufactured in the following manner.

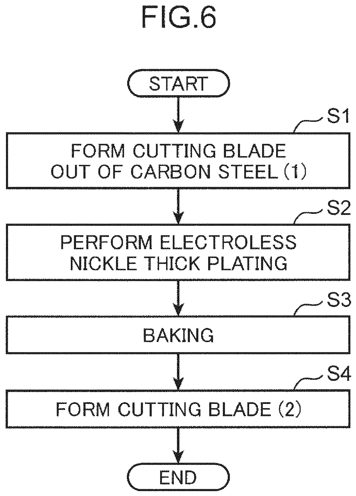

As shown in FIG. 6, firstly, the cutting blade 2 (3) including the blade bodies 22 is formed of a single sheet of steel (S1). In the first embodiment, the blade bodies 22 and the base element 21 are formed integrally, and therefore the whole cutting blade 2 is formed of a single sheet of steel. At this time, to give the cutting blade 2 including the blade bodies 22 the hardness equal to the hardness of the low-hardness section 22B, thermal conditioning is performed on the whole of the cutting blade 2 (heat treatment of quenching and annealing is performed). As the steel making up the blade bodies 22 and cutting blade 2 (the base material of the blade bodies 22), for example, carbon steel, such as S40C, carbon tool steel, such as SK85, or alloy tool steel, such as SKS5, can be used.

Subsequently, the electroless nickel plating is performed on the sliding surfaces 24 and the counter sliding surfaces 25 of the blade bodies 22 (S2). In the first embodiment, the cutting blade is entirely immersed in an electroless nickel plating solution to form a plating film over the entire outer peripheral surface of the cutting blade 2 including the sliding surfaces 24 and the counter sliding surfaces 25 of the blade bodies 22. At this step, a time for immersing the cutting blade in the electroless nickel plating solution is adjusted so that the thickness of the plating film formed on the outer peripheral surface of cutting blade 2 including the sliding surfaces 24 and counter sliding surfaces 25 becomes equal to the thickness d1 of the high-hardness section 22A.

Subsequently, the baking treatment is performed on the blade bodies 22 and the cutting blade 2 (S3). In other words, the cutting blade 2 is heated in a furnace or the like. The hardness of the plating film changes depending on a baking temperature (heating temperature). In this baking treatment, therefore, the baking temperature is adjusted to a temperature at which the hardness of the plating film formed on the outer peripheral surface of the cutting blade 2 including the sliding surfaces 24 and the counter sliding surfaces 25 becomes equal to the hardness of the high-hardness section 22A.

When the baking treatment is over, a blade-edging process, i.e., grinding is performed on the blade bodies 22 in such a way as to form a rake surface on the peripheral edge (both ends in the sliding direction and a projecting end) of each blade bodies 22, and final steps, such as distortion correction and surface treatment, are executed as well to form (complete) the cutting blade 2 (3) (S4). By this step, the plating is removed from the rake surface, which leaves the high-hardness section 22A formed on the sliding surface 24 (34) and the counter sliding surface 25 (35) of the outer peripheral surface of the blade body 22 (32), as shown in FIG. 5.

Through the above processing, the high-hardness section 22A having high hardness is formed on the part of blade body 22 that constitutes the sliding surface 24 and counter sliding surface 25 as the low-hardness section 22B having low hardness is formed on the other part of the blade body 22. Now, hardness and toughness are almost inversely proportional to each other at least in the case of steel. Having been subjected to the thermal conditioning to set its hardness to be relatively low, as described above, therefore, the low-hardness section 22B comes to possess higher toughness.

### (Effects)

As described above, in the cutting blade 2 (3) according to the first embodiment, the high-hardness section 22A having high hardness is formed on the whole of the sliding surface 24 (34) of the blade body 22 (32), that is, the part including both ends 24a (34a) and 24b (34b) in the front-to-rear direction of the sliding surface 24 (34) (i.e., the sliding direction of the sliding surface 24 (34)) constituting the blade edge. This allows an improvement in the cutting performance of the blade body 22 (32) and suppresses abrasion and chipping of the blade body 22 (32) to maintain its high cutting performance. Because the high-hardness section 22A is made extremely thin to have a thickness of 10 µm or more and 200 µm or less, most of the blade body 22 (32) excluding the high-hardness section 22A is configured as a part having high toughness, which makes the cutting blade 2 (3) hardly breakable. Hence the cutting blade 2 (3) that hardly breaks and that maintains high cutting performance can be provided.

In the first embodiment, the hardness of the high-hardness section 22A is set to HRC 55 or higher while the hardness of the low-hardness section 22B is set to HRC 40 or higher and HRC 50 or lower. This further suppresses abrasion and chipping of the blade body 22 (32) of the cutting blade 2 (3) and prevents breakage of the blade body 22 (32) as well. In particular, in the above-mentioned case where the cutting blade 2 (3) is used to cut plants, abrasion and chipping of the cutting blade 2 (3) caused by plants or stones in the ground on which the plants grow can be suppressed sufficiently and breakage of the blade body 22 (32) can be prevented as well.

In the first embodiment, the high-hardness section 22A is formed by performing the electroless nickel plating and baking treatment on the steel making up the blade body 22 (32). Because of this process, the hardness of the high-hardness section 22A constituting the sliding surface 24 (34) is increased certainly as the hardness of the low-hardness section 22B constituting most of the blade body 22 (32) is set low to increase the toughness of the low-hardness section 22B. The high-hardness section 22A being formed by the electroless nickel plating, in particular, certainly increases the cutting performance of the blade body 22 (32). Specifically, electroplating, such as hard chromium plating, allows a plating film on a corner or the like, where electricity flows through easily, to grow in thickness. For this reason, when electroplating, such as hard chromium plating, is performed on the sliding surface 24 (34), the thickness of the plating film at both ends 24a (34a) and 24b (34b) of the sliding surface 24 (34) constituting the blade edge increases and becomes irregular as well, which leads to a drop in the cutting performance. In contrast, electroless nickel plating allows formation of a uniform plating film, regardless of the shape of an object to be plated. Thus, according to the first embodiment, the plating film is formed on both ends 24a (34a) and 24b (34b) of the sliding surface 24 (34) to increase its hardness as the thickness of the film is reduced to suppress a drop in the cutting performance.

There is known a method of manufacturing the blade body 22 that hardly break and that maintain high cutting performance, in which a piece of steel made by joining together unwrought metal having high toughness and steel having high hardness is used. This method, however, takes much steel cost. In contrast, according to the first embodiment, the blade body 22 (32) is formed of a single sheet of steel. This reduces the steel cost and therefore allows manufacturing the blade body 22 that hardly break and that maintain high cutting performance at low cost.

### (2) Second Embodiment

A reciprocating-type cutting device 1 according to a second embodiment will then be described. The first embodiment and the second embodiment are the same in configuration except the configuration of the blade bodies 22 and 32 of the cutting blades 2 and 3. Hereinafter, the blade bodies 22 and 32 of the cutting blades 2 and 3 according to the second embodiment will mainly be described, and the same constituent elements as those of the first embodiment will be denoted by the same reference signs used in the first embodiment. In the following description of blade bodies 22 and 32, the blade body 22 of the cutting blade 2 will be described as one that represents both blade bodies 22 and 32.

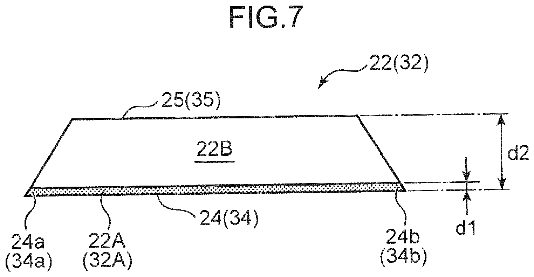

FIG. 7 is a sectional view of the blade body 22 according to the second embodiment. According to the second embodiment, every blade body 22 is provided with the high-hardness section 22A and with the low-hardness section 22B, as is in the first embodiment. In the second embodiment, however, only the sliding surface 24 is given hardness higher than the hardness of the other part of the blade body 22. Specifically, in the second embodiment, the blade body 22 has the high-hardness section 22A formed on only one of both sides in the thickness direction that serves as the sliding surface 24, and the other part of the blade body 22 including the counter sliding surface 25 constitutes the low-hardness section 22B. In the second embodiment, the high-hardness section 22A is formed over the entire sliding surface 24 including both ends 24a and 24b in the sliding direction of the sliding surface 24, that is, the blade edge. The blade bodies 32 of the cutting blade 3 are configured in the same manner as described above. The sliding surface 34 of every blade body 32 serve as the high-hardness section 32A, while the other parts of the blade body 32 serve as the low-hardness section. The high-hardness section 32A is formed over the entire sliding surface 34 including both ends 34a and 34b in the sliding direction of the sliding surface 34.

The hardness of the high-hardness section 22A and that of the low-hardness section 22B are set in the same manner as in the first embodiment. In the second embodiment, the hardness of the low-hardness section 22B is set to HRC 40 or higher and HRC 50 or lower and the hardness of the high-hardness section 22A is set to HRC 55 or higher, in the same manner as in the first embodiment. The thickness d1 of the high-hardness section 22A is also set in the same manner as in the first embodiment. In the second embodiment, therefore, the thickness d1 of the high-hardness sections 22A is determined to be a given size ranging from 10 µm or more to 200 µm or less, as is in the first embodiment. In the second embodiment, as in the first embodiment, the thickness d1 of the high-hardness section 22A is sufficiently smaller than the thickness d2 of the blade body 22. For example, the thickness d1 of the high-hardness section 22A is determined to be about 1110 or less of the thickness d2 of the blade body 22.

In the second embodiment, the high-hardness section 22A is formed by performing laser hardening on the steel making up the blade body 22, that is, the base material of blade body 22 that is made of the steel.

Specifically, in the second embodiment, the above step S 1 is executed, as is in the first embodiment. Specifically, the whole cutting blade 2 is formed of a single sheet of steel (carbon steel, such as S40C or SK85, carbon tool steel, or alloy tool steel, such as SKS5), and to give the cutting blade 2 including the blade bodies 22 the hardness equal to the hardness of the low-hardness section 22B, the whole cutting blade 2 is subjected to thermal conditioning.

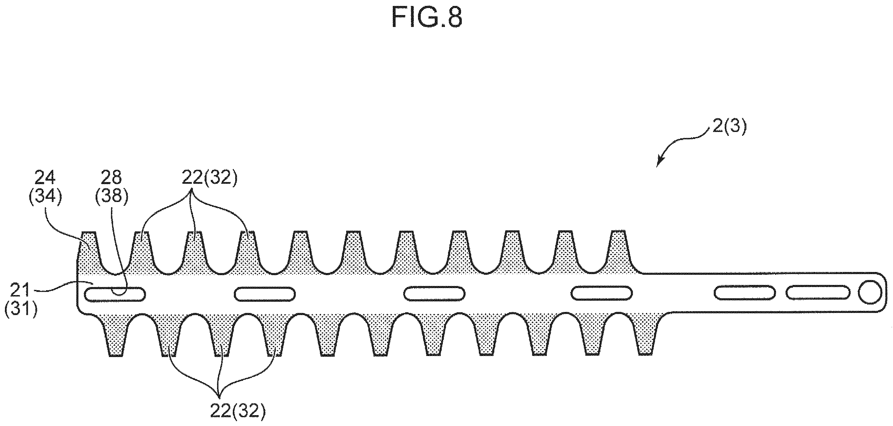

According to the second embodiment, however, the cutting blade 2 having been subjected to the thermal conditioning is then subjected to a laser hardening process, by which laser hardening is performed on the sliding surfaces 24 of the blade bodies 22. Specifically, laser light is emitted onto the sliding surfaces 24 to cause them to harden. At this time, laser power or the like is adjusted so that the thickness of the high-hardness section 22A becomes equal to the thickness d1. In the second embodiment, laser light is emitted onto shaded parts shown in FIG. 8, where the laser hardening is performed on the sliding surfaces 24 of individual blade bodies 22 only.

In the second embodiment, following the end of the laser hardening, post-processing, such as blade-edging, is carried out on the blade bodies 22 in the same manner as in the first embodiment.

Through the above processing, according to the second embodiment, the high-hardness section 22A is formed on the part of blade body 22 that constitutes the sliding surface 24 as the low-hardness section 22B is formed on the other part of the blade body 22, the low-hardness section 22B having low hardness but high toughness. Following the laser hardening, the cutting blade 2 may be subjected to a tempering treatment (low-temperature annealing treatment) in order to adjust the hardness of the laser exposure part, i.e., the sliding surface 24, to given hardness.

### (Effects)

As described above, in the cutting blade 2 (3) according to the second embodiment, as in the cutting blade 2 (3) according to the first embodiment, the high-hardness section 22A having high hardness is formed on the whole of the sliding surface 24 (34) of the blade body 22 (32), and the high-hardness section 22A is made extremely thin to have a thickness of 10 µm or more and 200 µm or less. Hence the cutting blade 2 (3) that hardly breaks and that maintains high cutting performance can be provided. In the second embodiment, as in the first embodiment, the hardness of the high-hardness section 22A is set to HRC 55 or higher while the hardness of the low-hardness section 22B is set to HRC 40 or higher and HRC 50 or lower. This certainly suppresses abrasion, chipping, or breakage of the blade body 22 (32) of the cutting blade 2 (3).

In the second embodiment, the high-hardness section 22A is formed by performing the laser hardening on the steel making up the blade body 22 (32). Thus, the high-hardness section 22A having high hardness can certainly be formed on the sliding surface 24 (34) by laser hardening as the low-hardness section 22B is formed of the steel having high toughness to make the blade body 22 (32) hardly breakable. Particularly, during laser hardening, laser heat can be locally concentrated on a part to be hardened due to self-cooling of a hardening target subjected to the laser hardening. Therefore, as laser light is emitted onto the sliding surface 24 (34) to form the high-hardness section 22A thereon, hardening of the other part of the blade body 22, i.e., the low-hardness section 22B is suppressed, which certainly increase its toughness.

In the second embodiment, as in the first embodiment, the blade body 22 (32) is formed of a single sheet of steel, which allows manufacturing the blade body 22, which hardly breaks and maintains high cutting performance, at low cost.

### (Example)

To confirm the effects of the present invention, the inventor has cut grass on the road sides, using the reciprocating-type cutting device 1 according to the second embodiment, that is, the reciprocating-type cutting device 1 in which the sliding surfaces 24 and 34 of all blade bodies 22 and 32 of two cutting blades 2 and 3 are provided respectively with the high-hardness sections 22A and 32A that are formed by laser hardening. Specifically, as an example of the reciprocating-type cutting device 1 according to the second embodiment, the reciprocating-type cutting device 1 equipped with two cutting blades including the high-hardness sections 22A (32A) each having a thickness d1 of 200 µm and hardness of about HRC 60 (about Hv 750) and the low-hardness sections 22B each having hardness of about HRC 45 has been used. In addition, a reciprocating-type cutting device in which no high-hardness section is formed on the sliding surface of each of the blade bodies of the two cutting blades and the overall hardness of each blade body 22 made of the same type of steel, the overall hardness including the hardness of the sliding surface, is about HRC 50 has been used as a comparative example, and grass on the road sides in the same area has been cut by using the reciprocating-type cutting device of the comparative example.

In grass cutting work using the device of the comparative example, the cutting performance of the device started to drop when half a day of the work was over. At this point, the cutting blade 2 on the upper side and the cutting blade 3 on the lower side had to be replaced with new one. Although both cutting blades 2 and 3 on the upper and lower sides were replaced in the middle of the work, the cutting blades 2 and 3 worn out so heavy that they had to be sharpened after the first day of the work was over. In contrast, in grass cutting work using the device of the example, the cutting performance of the device did not drop on the first day and during the morning of the second day, and started dropping in the afternoon of the second day or in the morning of the third day. When the cutting blades 2 and 3 on the upper and lower sides were replaced in the middle of the work, the cutting blades 2 and 3 worked well until the end of the fifth day of the work, at which the cutting blades 2 and 3 were found worn out to the extent that they had to be sharpened. This means that a time the cutting blades 2 and 3 of the device of the example take to wear out is five times as long as a time the cutting blades 2 and 3 of the device of the comparative example take to wear out. As a result, the number of times of sharpening work on the cutting blades 2 and 3 has been reduced to about 115 of the same the device of the comparative example needs.

The reciprocating-type cutting device 1 according to the example has been used in the grass cutting work for about three months, during which the cutting blades 2 and 3 did not get broken even once.

### (Modifications)

In the first embodiment, the case where the high-hardness section 22A is formed also on the counter sliding surface 25 (35) has been described. However, as in the second embodiment, the high-hardness section 22A may be formed on the sliding surface 24 (34) only as formation of the high-hardness section 22A on the counter sliding surface 25 (35) is skipped. In this case, the blade body 22 (32) is immersed in the electroless nickel plating solution as the counter sliding surface 25 (35) is masked.

In the first embodiment, electroless nickel plating may be performed only on the blade bodies 22 (32) of the cutting blade 2.

In the first and second embodiments, before execution of the electroless nickel plating or laser hardening, the blade-edging may be performed on the blade body 22 to form the rake surface (32) thereon.

In the first and the second embodiments, the case where the high-hardness section 22A is formed on all blade bodies 22 (32) included in the cutting blade 2 (3) has been described. However, the high-hardness section 22A may be formed on only some blade bodies 22 (32) among the plurality of blade bodies 22 (32) included in the cutting blade 2 (3). In this case, on which blade body 22 (32) the high-hardness section 22A is to be formed is determined without any restrictions. However, in the case of the first and second embodiments, where the cutting blade 2 (3) is of an elongated shape and the case 5 is attached to the one side (rear side) in the longitudinal direction of the cutting blade 2 (3), the case 5 being fitted with the operation handle, it is preferable that the high-hardness section 22A be formed on blade bodies 22 (32) on the front end side of the cutting blade 2 (3) (which is the front side that is opposite to the case 5 in the longitudinal direction). In this configuration, the hardness of blade bodies 22 (32) located on the front side of the cutting blade 2 (3) and frequently coming into contact with the object to be cut is increased. This effectively improves the cutting performance and maintains the improved cutting performance and at the same time, makes the hardness of blade bodies 22 (32) located closer to the operator relatively lower to ensure safety in a more secure manner.

In the first and the second embodiments, the high-hardness section 22A may be formed only on both ends 24a (34a) and 24b (34b) in the sliding direction (front-to-rear direction) of the sliding surface 24 (34), that is, only on the blade edge of the blade body 22 (32).

In the first and the second embodiments, a double-edged type cutting blade is used as the cutting blades 2 and 3 having the blade bodies 22 and 32 formed on both sides in the width direction of the base elements 21 and 31 of the cutting blades 2 and 3, respectively. However, the configuration of the present invention can also be applied to a single-edged type cutting blade having the blade bodies 22 (32) formed only on one side in the width direction of the cutting blades 2 (3).

In the first and the second embodiments, the case where the base elements 21 and 31 of the cutting blades 2 and 3 each have a long plate shape has been described. The configuration of the present invention, however, can also be applied to a cutting blade including a base element having a different shape, such as a semicircular shape.

The above embodiments are summarized as follows.

A cutting blade applied to a reciprocating-type cutting device including a pair of cutting blades that are reciprocated in a state of being superposed on each other to cut an object to be cut. The cutting blade includes: a base element; and a plurality of blade bodies jutting from the perimeter of the base element, the plurality of blade bodies each having a sliding surface that slides over a mating blade body. At least some of the plurality of blade bodies each have a high-hardness section formed in a part including at least both ends in a sliding direction of the sliding surface, the high-hardness section having hardness higher than hardness of the other part. The thickness of the high-hardness section is set to 10 µm or more and 200 µm or less.

According to this cutting blade, the high-hardness section having high hardness is formed on both ends in the sliding direction of the sliding surface of the blade body. This increases the hardness of both the ends serving as a part that cuts the object to be cut, thus improving cutting performance and suppressing abrasion and chipping of the part to maintain better cutting performance. In addition, having its thickness been set to 10 µm or more and 200 µm or less, the high-hardness section is made thin. As a result, most of the blade body excluding the high-hardness section is made a high toughness part, which makes the cutting blade hardly breakable. Hence a cutting blade that hardly breaks and that maintains better cutting performance can be provided.

The hardness of the blade body is determined such that, for example, the hardness of the high-hardness section is set to HRC 55 or higher while the hardness of the other part of the blade body (the other part excluding the high-hardness section) is set to HRC 40 or higher and HRC 50 or lower.

An example of the-high hardness section is a high-hardness section formed by performing electroless nickel plating on steel making up the blade body.

According to this configuration, a low-hardness section is formed of steel having high toughness to make the blade body hardly breakable. Furthermore in this configuration, the steel is subjected to the electroless nickel plating to form a sliding surface having higher hardness. This improves the cutting performance of the blade body and maintains its better cutting performance. In the electroless nickel plating, the thickness of a plating film can be kept small, the plating film being formed on the ends of the sliding surface that serve as the part that cuts the object to be cut. This improves the cutting performance of the blade body.

Another example of the high-hardness section is a high-hardness section formed by performing laser hardening on the steel making up the blade body.

According to this configuration, as in the above configuration, the low-hardness section is formed of the steel having high toughness to make the blade body hardly breakable. Furthermore in this configuration, the steel is subjected to the laser hardening to form the sliding surface having higher hardness. This improves the cutting performance of the blade body and maintains its better cutting performance. In the laser hardening, laser heat is concentrated on a part to be hardened, the part belonging to a hardening target. This suppresses the influence of the laser heat on other parts. According to this configuration, the hardness of the sliding surface is increased by the laser hardening as a reduction in the toughness of the other parts caused by the laser heat is avoided. This ensures the sufficient toughness of most of the blade body.

A reciprocating-type cutting device includes: two cutting blades of the above configuration, a holder holding the two cutting blades in a state of being superposed on each other; and a drive unit that causes the two cutting blades to reciprocate in a sliding direction of the sliding surface.

A method of manufacturing a cutting blade includes: forming the cutting blade out of a single sheet of steel; performing electroless nickel plating on the sliding surface of at least one of the blade bodies of the cutting blade formed of the steel; and following the electroless nickel plating, performing a baking treatment on the sliding surface to form the high-hardness section.

According to this method, the above cutting blade that hardly breaks and that offers and maintains high cutting performance can be manufactured. In addition, by using a single sheet of steel as a base material of the cutting blade, manufacturing costs can be reduced as the high-hardness section is formed on the sliding surface, compared to a manufacturing method by which the cutting blade is manufactured by using a piece of steel made by joining together unwrought metal having high toughness and steel having high hardness.

Another method of manufacturing a cutting blade includes: forming the cutting blade out of a single sheet of steel; and performing laser hardening on the sliding surface of at least one of the blade bodies of the cutting blade formed of the steel to form the high-hardness section.

According to this method, as by the above method, the above cutting blade that hardly breaks and that maintains better cutting performance can be manufactured. In addition, by using a single sheet of steel as the base material of the cutting blade, the manufacturing costs can be reduced, compared to the manufacturing method by which the cutting blade is manufactured by using a piece of steel made by joining together unwrought metal having high toughness and steel having high hardness. Forming the sliding surface by the laser hardening offers another advantage of ensuring the sufficient toughness of most of the blade body, as mentioned above.

## Claims

1. A cutting blade applied to a reciprocating-type cutting device including a pair of cutting blades that are reciprocated in a state of being superposed on each other to cut an object to be cut, the cutting blade comprising:
a base element; and a plurality of blade bodies jutting from a perimeter of the base element, the plurality of blade bodies each having a sliding surface that slides over a mating blade body,
wherein at least one of the plurality of blade bodies each have a high-hardness section formed in a part including at least both ends in a sliding direction of the sliding surface, the high-hardness section having hardness higher than hardness of the other part, and
a thickness of the high-hardness section is set to 10 µm or more and 200 µm or less.

2. The cutting blade according to claim 1, wherein
hardness of the high-hardness section is set to HRC 55 or higher while hardness of a part of the blade body, the part being defined by excluding the high-hardness section, is set to HRC 40 or higher and HRC 50 or lower.

3. The cutting blade according to claim 1 or 2, wherein
the high-hardness section is formed by performing electroless nickel plating on steel making up the blade body.

4. The cutting blade according to claim 1 or 2, wherein
the high-hardness section is formed by performing laser hardening on steel making up the blade body.

5. A reciprocating-type cutting device comprising:
two pieces of the cutting blades according to any one of claims 1 to 4,
a holder holding the two pieces of the cutting blades in a state of being superposed on each other; and
a drive unit that causes the two pieces of the cutting blades to reciprocate in a sliding direction of the sliding surface.

6. A method of manufacturing the cutting blade according to claim 1 or 2, the method comprising:
forming the cutting blade out of a single sheet of steel;
performing electroless nickel plating on the sliding surface of at least one of the blade bodies of the cutting blade formed of the steel; and following the electroless nickel plating, performing a baking treatment on the sliding surface to form the high-hardness section.

7. A method of manufacturing the cutting blade according to claim 1 or 2, the method comprising:
forming the cutting blade out of a single sheet of steel; and
performing laser hardening on the sliding surfaces of at least one of the blade bodies of the cutting blade formed of the steel to form the high-hardness section.
